# EUROPEAN PATENT SPECIFICATION

(11) **EP 1 432 214 B1**
(45) Date of publication and mention of the grant of the patent: **27.05.2009**
(21) Application number: 03104137.9
(22) Date of filing: 10.11.2003
(51) Int. Cl.: H04L 29/12, H04W 4/00

(54) **Method, system and console for controlling of a radio network by means of a GTP tunnel**
Verfahren, System und Konsole zur Steuerung eines Funknetzes durch einen GTP Tunnel
Procédé, système et console pour contrôler un réseau radio à travers un tunnel GTP

(30) Priority: 20.12.2002 GB 0229903
(43) Date of publication of application: 23.06.2004
(73) Proprietor: MOTOROLA INC., Schaumburg, IL 60196 (US)
(72) Inventor: DOLGOV, Konstantin, 2600, Glostrup (DK); FRANDSEN, Svend, 2600, Glostrup (DK); JAKOBSEN, Ken, 2600, Glostrup (DK); PEDERSEN, Kristian, Gronkjaer, 2600, Glostrup (DK); BLOMBERG, Hans, Christian, 2600, Glostrup (DK)
(74) Representative: McCormack, Derek James

(56) References cited:
- WO-A-01/69858
- WO-A-02/05538
- "Digital cellular telecommunications system, Phase 2+; 3gpp TS 23.060 v 5.3.0 Release 5" ETSI STANDARDS, EUROPEAN TELECOMMUNICATIONS STANDARDS INSTITUTE, SOPHIA-ANTIPO, FR, vol. 3-SA2, no. V530, September 2002 (2002-09), XP014007572 ISSN: 0000-0001

## Description

### Field of the Invention

This invention relates to a method of communicating and a fixed host therefore. In particular, it relates to the allocation of addresses to communication units in order for data to be subsequently routed to such units. The invention is particularly applicable to, but not limited to, interaction between Consoles and Operator equipment in a trunked mobile radio system.

### Background of the Invention

Present day communication systems, both wireless and wire-line, have a requirement to transfer data between communication units. Data, in this context, includes speech communication. Such data transfer needs to be effectively and efficiently provided for, in order to optimise use of limited communication resources.

For data to be transferred across communication networks, a communication unit addressing protocol is required. The communication units are generally allocated addresses that are read by a communication bridge, gateway and/or router, in order to determine how to transfer the data to the addressed unit. The interconnection between networks is generally known as internetworking (or internet).

Networks are often divided into sub-networks, with protocols being set up to define a set of rules that allow the orderly exchange of information. Currently, the two most popular protocols used to transfer data in communication systems are: Transfer Control Protocol (TCP) and Internet Protocol (IP). In all but the simplest of communication systems, these two protocols often work as a complementary pair. The IP portion corresponds to data transfer in the network layer of the well-known OSI model and the TCP portion to data transfer in the transport layer of the OSI model. Their operation is transparent to the physical and data link layers and can thus be used on any of the standard cabling networks such as Ethernet, FDDI or token ring.

The Internet Protocol adds a data header on to the information passed from the transport layer. The resultant data packet is known as an Internet datagram. The header of the datagram contains information such as destination and source IP addresses, the version number of the IP protocol etc. An IP address is assigned to each node on the Internet. It is used to identify the location of the network and any sub-networks.

The IP program running on each node knows the location of a gateway on the network, where the gateway links the interconnected networks. Data then passes from node to gateway through the Internet.

Each node using TCP-IP communications requires an IP address that is then matched to its token ring or Ethernet MAC address. The MAC address allows nodes on the same segment to communicate with each other. In order for nodes on a different network to communicate with one another, each node must be configured with an IP address.

Nodes on a TCP-IP network are either hosts or gateways. Any nodes that run application software, or are terminals, are defined as hosts. Any node which is able to route TCP-IP packets between networks is called a TCP/IP gateway node. This node must have the necessary network controller boards to physically interface to other networks.

A typical IP address consists of two fields: the prefix field - a network number identifies the network associated with that particular address, and the suffix field - a host number identifies the particular host within that network. The IP address is 32 bits long and can therefore theoretically address 2³² (over four billion) physical networks. One problem, however, associated with using an IP address containing prefixes and suffixes lies in the decision on how large to make each field. If the prefix is too small, only a few networks will be able to be connected to the Internet. However, if the prefix is made larger, then the suffix has to be reduced, which results in a network being able to support only a few hosts.

The present version of the Internet Protocol addressing scheme (IPv4) can accommodate a few very large networks, or many small networks. In reality, a reasonable number of networks of various sizes are required to be supported. However, most organisations tend to have their own private IP addressing scheme, arranged to accommodate a larger network than they generally need, in order to allow for future network expansion.

As a consequence, the current version of Internet Protocol (IPv4) has scarce addressing space and future versions are therefore being developed.

Trunked radio communication systems such as the TErrestrial Trunked RAdio (TETRA) system standardised by the European Telecommunication Standards Institute (ETSI) are typically configured for use by the emergency services, such as Ambulance, Fire Brigade, Police Forces, etc. The plethora of benefits associated with using IP and packet data technology, has made it desirable to adapt systems such as TETRA to support IP and packet data communication.

In TETRA-compatible systems, the trunked system has to be connected to the customer's private network in order to provide packet data capabilities. However, each customer has an individual IP addressing plan, which may conflict with another customer's IP addressing plans. This means that IP addressing plans of each and every customer should be independent from each other as well as being independent from the trunked TETRA IP addressing plan.

An IP address can be defined in the form:
'aaa'.'bbb'.'ccc'.'ddd';

Where: 'aaa', 'bbb', 'ccc' and 'ddd' are integer values in the range '0' to '255'.

On the Internet the 'aaa'.'bbb'.'ccc' portions normally define the sub-network and the 'ddd' portion normally defines the host. Such numbering schemes are difficult to remember. Hence, symbolic names (often termed domain names) are frequently used instead of IP addresses to identify individual communication units. Normally, the DNS server is reachable by all the hosts on the network via the IP transport protocol. Therefore the DNS protocol for performing address lookup can be carried over IP.

In systems employing a limited number of addresses by which to identify individual communication units, a technique called dynamic addressing is used. Dynamic addressing requires a pool of addresses to be maintained by an address allocation server, for example a Dynamic Host Configuration Protocol (DHCP) server. The DHCP server is located in the customer network. There is at least one DHCP server per customer's domain. Whenever a host is connected to a network, a signalling process is performed between the host and DHCP server, so that the DHCP server is able to assign an available IP address to the host. In order to do so, the host needs to send the DHCP server its unique ID. When the signalling process is de-activated, the IP address will be returned to the addressing pool and will wait to be assigned to other terminals.

If a mobile station (MS) initiates an Internet connection, the DHCP server recognises the need to identify the MS and typically informs a domain name server (DNS) that a new Internet Protocol address assignment has occurred. Subsequently, the local DNS can then map the mobile station's domain name to an Internet Protocol address allocated by the DHCP, and pass the address information to an Internet Host.

Due to the static nature of typical devices that use IP, such as networked PCs and servers, DHCP has been widely used in the Intranet environment to allocate IP addresses dynamically to any hosts that are connected to a network. However, it is clear that such an arrangement is unacceptable in a wireless domain when the communicating unit requiring an IP address, is not physically connected to the Internet. With such wireless technology, the mobile station needs to have previously established a logical connection with the Internet, in order to have been allocated an IP address and access Internet services, information and applications. This logical connection is generally referred to as a packet data protocol (PDP) context.

Furthermore, as the wireless communications units will not be permanently connected to the Internet, there will be many occasions when the MS will be in a mode where no PDP context with the Internet has been established.

Due to the recent growth in communication, particularly in Internet and wireless communications, there exists a need to provide TCP-IP data transfer techniques in a wireless communications domain.

An established harmonised cellular radio communication system is GSM (Global System for Mobile Communications). An enhancement to this cellular technology can be found in the General Packet Radio System (GPRS), which provides packet switched technology on a basic cellular platform, such as GSM. A further harmonised wireless communications system currently being defined is the universal mobile telecommunication system (UMTS). UMTS is intended to provide a harmonised standard under which cellular radio communications networks and systems will provide enhanced levels of interfacing and compatibility with other types of communications systems and networks, including fixed communications systems such as the Internet.

Information to be transmitted across the Internet is packetised, with packet switching routes established between a source node and a destination node. Hence, GPRS and UMTS networks have been designed to accommodate packet switched data to facilitate Internet services, such as message service, information service, conversational service and casting service.

In the context of a TETRA-type system, it is envisaged that a gateway GPRS service node (GGSN) will be used to route (tunnel) customer IP data between Customer Enterprise networks and MSs. A GGSN can support multiple tunnels.

Furthermore, there needs to be agreement between Console equipment and Operator equipment in dealing with IP addresses. At present, it is impossible to send packet data from consoles to customer networks and MSs due to the fact that the respective IP networks may contain the same IP address as the customer ones, as the IP plans are independent. This is primarily a result of there being limited private IP address space for companies/customers to use (around 16.000.000 hosts equating to 10.x.x.x per subnet). It is noteworthy that the rest of IP addressing space is managed by the Internet community and cannot be used without specific permission.

However, as the only feasible solution is to use GGSNs, MSs in the trunked system are assigned to roughly half of this available customer IP addressing space. To be able to send packet data to MSs, the console has to belong, in effect, to the same customer IP addressing space. The inventors of the present invention have therefore recognised that a problem arises in this scenario, as the console is typically an integral part of the trunked radio system's IP addressing space.

Furthermore, it is frequently determined that a customer's private IP addressing space is already in use by the trunked system customers. In this scenario, normal IP routing between the two parties cannot be performed, as there is no unique IP address for the network elements. Clearly, a solution of negotiation between all customers and interested parties on consistent and unique IP addresses is impractical.

Thus, a need exists to resolve this addressing conflict, and enable a console to be able to route data packets to the customer network. In addition, a need exists for the console to be addressable as a host from within the customer network.

An alternative solution may be to write a specific translation program for consoles. Such a solution will create tunnels between the console packet data feature and the customer network. In this regard, a console will belong to the customer's IP addressing space for packed data operations. However, the inventors of the present invention have recognised that this approach has at least two major disadvantages. First, the number of tunnels required for the system is likely to be substantial.

This will significantly impact the performance of the customer interface router. The customer interface router is located at the border between the trunked radio system and the customer IP domains, and will need to terminate all such tunnels. Secondly, consoles may belong to only one customer network, as they will be assigned one IP address.

A third solution would be to use a Network Address Translation (NAT) function, typically linked to a border gateway (BG) in such systems. The NAT is a feature in the router that allows the IP addresses to be substituted from one IP domain to another IP domain, for example by replacing source destination addresses within a header of the IP data packet. In this context, there are a couple of types of NAT configurations. The most common is a many-to-one mapping arrangement where several hosts are translated to a single address but where the hosts use different UDP or TCP port numbers. An advantage of this arrangement is that it is easy to configure and it conserves IP address space.

A many-to-many mapping arrangement translates multiple addresses by assigning addresses from a pool. Each subsequent connection is assigned the next available address from the pool. A one-to-many mapping arrangement translates a single address to one of many addresses. In a load-sharing connection, each subsequent connection to the external address is translated into the next available address from the internal address pool. In an outbound connection, each subsequent connection from a single internal host is assigned a new IP address, making it appear as though a single user is a multiple user. Unfortunately, all of these arrangements work best with applications that establish a client-server type relationship, where the client always initiates the service and the server responds.

Maintaining a NAT application for each of many consoles to link into multiple customer networks is a huge administrative task. In addition, a NAT-based solution fails to assign IP addresses dynamically, as provided by a GGSN approach. Furthermore, if a NAT-based approach is used then the traffic to the MS must cross the customer network, which is not desirable. Finally, a NAT-based approach is not consistent with encryption techniques. This makes it particularly unsuitable for trunked radio customers who require secure communication within their IP domain.

A yet further reason for the unsuitability of a NAT-based approach to resolve the aforementioned problems is that NAT technology changes only the source and/or destination IP address in the header of an IP packet. NAT may also be configured to change the source and/or destination port numbers in the header of an IP packet.

However, NAT technology does not change the contents of the IP packet itself. Hence, where a serving GPRS service node (SGSN) address of a packet data protocol (PDP) context is negotiated by relevant GPRS transport protocol (GTP) messages (i.e. "Create PDP context" and "update PDP context"), the NAT will fail to cope with the addresses when the SGSN and GGSN IP addresses are negotiated within the data packet payload using application layer protocols.

Thus, a need exists to provide a communication system, a communication unit and method of addressing; wherein the abovementioned disadvantages may be alleviated.

WO 01/69858 A1 describes a method for assigning unique identifiers for allowing communication between a GPRS system and a RADIUS (Remote Access Dial In User Service) server. The method includes connecting one or more external networks to the GPRS system and identifying the or each network with an APN (Access Point Name), and assigning to an or each APN external network a gateway address. The method further includes passing an APN external network authentication request from a GGSN (Gateway GPRS Support Node) to the RADIUS server, providing from the RADIUS server a subscriber IP address unique for the APN external network and the GGSN combining the APN gateway address and the subscriber IP address.

### Summary of the Invention

In a first aspect of the present invention, a method of communicating information in a communication system is provided, in accordance with Claim 1.

In a second aspect of the present invention, a console is provided, in accordance with Claim 8.

In a third aspect of the present invention, a communication system is provided, in accordance with Claim 13.

Further aspects of the present invention are as claimed in the dependent Claims.

In summary, the aforementioned conflict problems are resolved by making it possible for packet data applications to be supported on a fixed host which is a console in a dispatch and control radio system such as a TETRA system. The console utilises a GPRS transport protocol (GTP) tunnel to gain access to customer IP networks by requesting IP addresses from databases of the respective networks via a GGSN, to which the console is linked via said GTP tunnel.

Exemplary embodiments of the present invention will now be described, with reference to the accompanying drawings, in which:

### Brief Description of the Drawings

FIG. 1 is a block schematic diagram of a domain-based wireless communication system architecture, adapted to support embodiments of the present invention;
FIG. 2 is a block diagram of a protocol stack adapted to support an embodiment of the present invention;
FIG. 3 is a block diagram of a communication system indicating the signalling and tunnelling paths used, in accordance with embodiments of the present invention; and
FIG. 4 is a message sequence chart illustrating the communication between a console, a GGSN and a DHCP, adapted in accordance with an embodiment of the present invention.

### Detailed description of embodiments of the invention

In summary, an embodiment of the present invention proposes to use a general packet radio system (GPRS) Transport Protocol (GTP), run on a Gn interface, between Consoles and GGSN. Normally, a GTP is a tunnel protocol used between a gateway GPRS service node (GGSN) and a server GPRS service node (SGSN) in cellular networks. However, in accordance with the preferred embodiment of the present invention, when applied to a TETRA network, the GTP tunnel is implemented between the GGSN and a Packet Data Gateway (PDG).

In this way, the inventors of the present invention propose to reconfigure the role of the console (i.e. a fixed host) by applying a GTP tunnel linking the console to the GGSN. Additionally, the console is configured to simulate the functionality of a subscriber unit/MS in respect of packet data operations. The GTP tunnel, together with the corresponding ability for the GGSN to translate the IP address request to a L2TP message, enables the console to access IP address information from any of the communication networks by use of access point names (APNs).

Notably, in this regard, the GGSN terminates a number of GTP tunnels from the consoles and provides only one connection to each of the Customer networks. In the case of a GTP tunnel, the console will no longer operate with the IP address from the customer network. This address, in contrast to known operations, will be assigned by the GGSN using the Customer DHCP server.

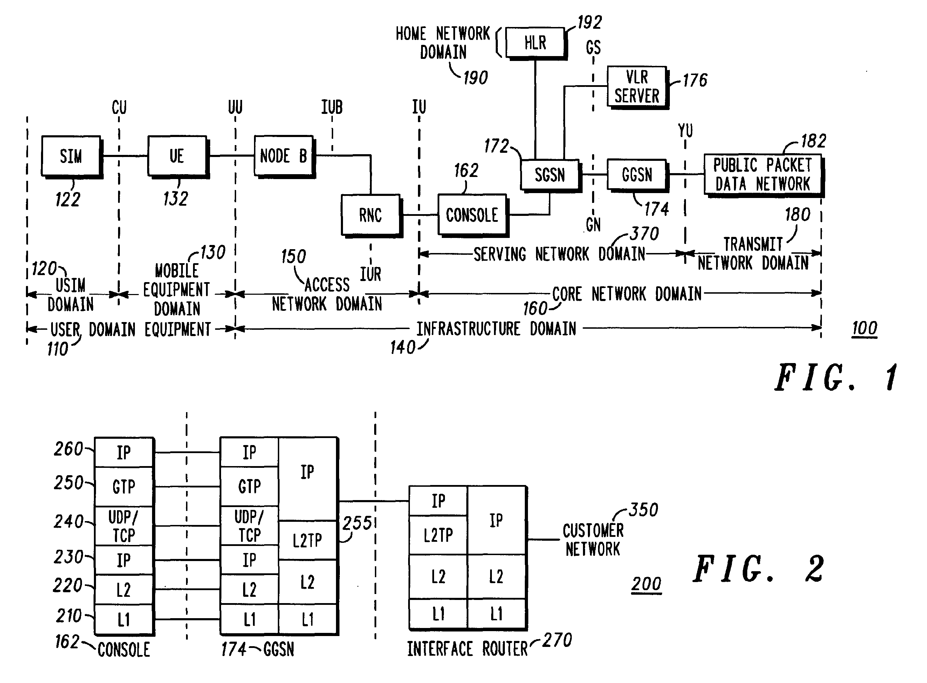

Referring now to FIG. 1, a communication system architecture 100, in a hierarchical domain-based form, is shown. The communication system architecture 100 is compliant with, and contains network elements capable of operating over, any number of air-interface standards, including TETRA, UMTS, GSM and/or a GPRS system.

The communication system architecture 100 is conveniently considered as comprising:
(i) A user equipment domain 110, made up of a user subscriber identity module (USIM) domain 120 and a mobile equipment domain 130; and
(ii) An infrastructure domain 140, made up of an access network domain 150, and a core network domain 160, which is in turn made up of a serving network domain 170 and a transit network domain 180 and a home network domain 190.

In the mobile equipment domain 130, a user equipment (UE) 132, which may be any form of subscriber or mobile communication unit, receives data from a user SIM 122 in the USIM domain 120. This is generally effected via the wired Cu interface. The UE 132 has a data communication link with a Node B 152 (or other form of base transceiver station) in the network access domain 150 via the wireless Uu interface. Within the network access domain 150, the Node Bs 152 contain one or more transceiver units and communicate with the rest of the cell-based system infrastructure, for example RNC 154, via an I_{ub} interface, for example as defined in the UMTS specification.

The RNC 154 communicates with other RNCs (not shown) via the Iur interface. The RNC 154 communicates with a SGSN 172 in the serving network domain 170 via the Iu interface. Within the serving network domain 170, the SGSN 172 communicates with a GGSN 174 via the Gn interface, and the SGSN 172 communicates with a VLR server 176 via the Gs interface. The SGSN 172 communicates with an HLR server (192) in the home network domain 190 via the Zu interface. The GGSN 174 communicates with a public data network in the transit network domain 180 via the Yu interface.

The GGSN 174 (and/or SSGN) is responsible for interfacing with a Public Switched Data Network (PSDN) 182 such as the Internet or a Public Switched Telephone Network (PSTN). The SGSN 172 performs a routing and tunnelling function for traffic within say, a UMTS core network, whilst a GGSN 174 links to external packet networks, in this case ones accessing the UMTS mode of the system.

Thus, the elements RNC 154, SGSN 172 and GGSN 174 are conventionally provided as discrete and separate units (on their own respective software/hardware platforms) divided across the access network domain 150 and the serving network domain 170.

The GGSN 174 is the Core Network element responsible for concentrating and tunnelling user data within the core packet network to the ultimate destination (e.g., an internet service provider (ISP)). In the context of the present invention, the GGSN 174 performs the following functions:
(i) Tunnelling;
(ii) Routing (based on IP and APN);
(iii) APN - IP address resolution;
(iv) Association between APN and customer domain; and
(v) Association between APN and TETRA MS address domains.

Therefore, in the context of the invention, the subsequent use of the term 'GGSN' should be viewed as any network element performing a number, preferably all, of the above functions.

In the preferred embodiment of the invention, at least one console 162 has been operably coupled to the GGSN 174 via a general packet radio system (GPRS) transport protocol GTP tunnel. The console includes a transceiver (not shown) for transmitting and/or receiving communication to/from a number of communication networks, using a GTP tunnel. The console 162, inter-alia, includes a processor (not shown), operably coupled to the transceiver, for generating a message that includes an access point name (APN) to request an Internet Protocol address relating to a communication network that it wishes to communicate with.

In operation, a context PDP activation procedure of the preferred embodiment of the present invention is as follows. Let us assume that the console 162 wants to send a data packet to UE 132. The console 162 sends a 'create packet data protocol (PDP) context' message to its associated GGSN 174. The 'create PDP context' message includes a desired Access point name (APN), for example, the APN may be 'mot.com'. In this regard, the GGSN 174 assigns an IP address from the DHCP server (not shown) corresponding to the APN. In other words, the IP address determines which tunnel (i.e. to which customer network) the GGSN 174 shall send the console's data packet to.

In operation, two sets (shown as columns) of tunnels are used by GGSN 174, when Console 162 sends data to a UE, for example UE 132 of FIG. 1. First, the GTP tunnel between Console and GGSN is used, followed by the L2TP tunnel between the GGSN 174 and the customer network 350. The customer network 350 finds out that destination address belongs to the UE 132 and sends this packet back to the GGSN 174 through L2TP. Upon receiving this data packet, the GGSN 174 tunnels the data packet to a SGSN and further up to the UE.

Following receipt of the 'create PDP context' message, including the 'APN = mot.com', the GGSN 174 is made aware that it needs to initiate a layer-2 transport protocol (L2TP) call to Motorola's network, thereby to establish a secure tunnel to Motorola's network. Thus, the GGSN performs the same services and functions for a fixed host 'console' as it currently does for mobile user equipment routing data packets via a SGSN.

Advantageously, as a result of the console 162 using APNs, the console 162 does not need to have a number of IP addresses associated with the customer network contained within its IP stack. Thus, the concept of GTP has been applied to a fixed host scenario, with regard to its application to a console. This is in contrast to known uses of GTP, which have previously only been applied to mobile scenarios.

Hence, the benefits previously associated with a mobile host are transferred to that of a fixed host (console), for example:
(i) Dynamic IP addressing from a customer domain assignment to the host on a 'need to use' basis, which means that different hosts are able to reuse the same IP address if the IP address is not currently in use by any other host. In the other words, not all hosts use the Packet data feature at the same time, so the number of IP addresses allocated to Packet Data features may be less than the number of physical hosts and
(ii) Flexibility on the time available for the host to send or receive packet data. In this regard, the Host uses IP address only when it sends and/or receives data. As soon as a packet data session is terminated, the IP address becomes available for the other hosts.

A suitable protocol stack 200, between the console 162, GGSN 174 and a customer network 350 is illustrated in FIG. 2. The protocol stack for communication between the console 162 and the GGSN 174 across the Gn interface, includes the standard protocol layers:
(i) Layer-1 210 is a physical layer 1 of the standard OSI model, which may be for example a local area network (LAN) such as Ethernet, FDDI, Token ring etc.) or a serial (X.21, v.35, E1, etc.) port providing messages from the console to the core of the Radio network,
(ii) Layer-2 220 providing support for medium access layer (MAC) signalling. In this regard, it is envisaged that the Layer-2 220 may be MAC for LANs or Frame relay, PPP, etc. for dedicated lines,
(iii) Internet Protocol layers 230, 260 providing, amongst other features, routing and packet data capability, where layer 230 provides IP transport in the radio network for the above presented layers 260 containing customer IP data, and
(iv) A UDP/TCP layer 240 providing, amongst other features, transport capabilities for signalling and tunnelling (e.g. GTP) protocols.

Notably, a GTP layer 250 has been included to facilitate the aforementioned inventive concept for treating the console as a mobile/subscriber unit. Furthermore, the GGSN 174 has been adapted to deal with GTP messages from the console to establish L2TP messages with the customer network 350. Such L2TP messages are transferred to an interface router 270 across the Yu interface, where they are converted to Layer-2 messages for transmittal to the customer network. In this manner, the console 162 is able to generate messages for delivery to the customer network via a GTP tunnel 250 and the GGSN 174.

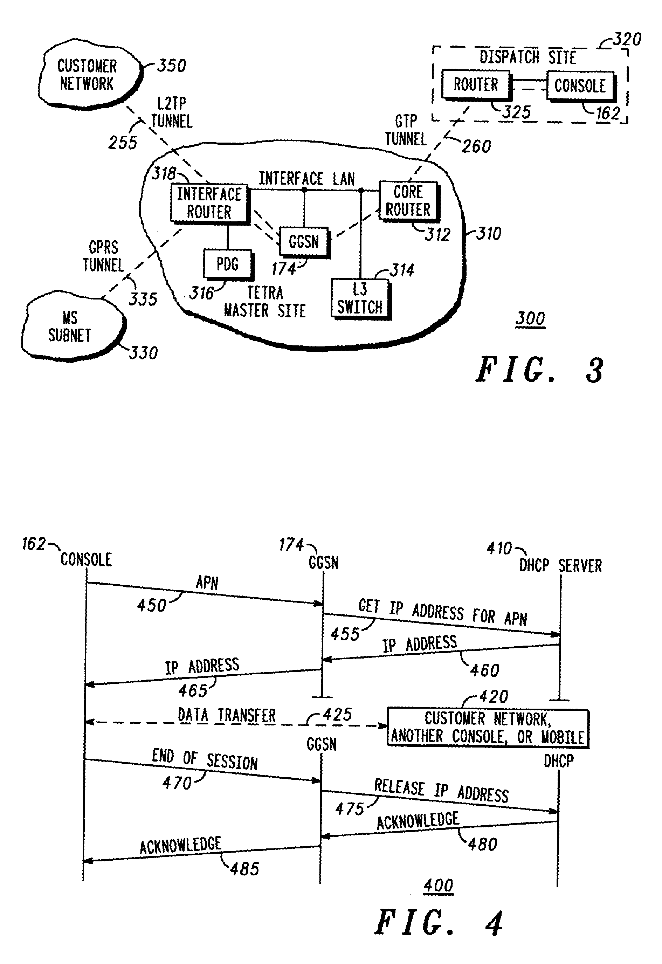

Referring now to FIG. 3, a block diagram illustrates the respective configuration of the network elements, the interfaces, interface routers and the tunnels used in a preferred communication system 300. The block diagram illustrates a TETRA master site 310 that includes an interface router 318, operably coupled to a customer network 350 via a L2TP tunnel 255 (as described above) and a subscriber unit sub-network 330, via a general packet radio system (GPRS) tunnel 335.

The interface router 318 is operably coupled to a packet data gateway (PDG) 316 within the TETRA master site 310 via a data local area network (LAN). The interface router 318 is operably coupled via an interface LAN to a core router 312, a Layer-3 switch 314 and a GGSN 174. In accordance with the preferred embodiment of the invention, a GTP tunnel 260 has been configured between the GGSN 174 via a core router to a dispatch site 320. The dispatch site 320 includes a router 325 linking the GGSN 174 to a console 162.

Advantageously, it can be seen that the console 162 can be connected to many different customer networks, by simply applying different APNs to the messages. Hence, the console 162 is able to support several concurrent IP sessions. The respective IP address(es) from the customer network is supplied by the DHCP Server at that particular network to the console 162 via the GGSN 174. These IP addresses are then dynamically assigned to the console's messages whilst the console 162 is sending or receiving data, as described in greater detail with respect to FIG. 4. Beneficially, the GGSN 174, in this context, also provides a level of security to the accessing of the Customer network 350.

Referring now to FIG. 4, a message sequence chart 400 illustrates the sequence of messages between a console 162, a GGSN 174 and a DHCP Server 410 in accordance with the preferred embodiment of the present invention. The preferred signalling includes a console 162 initiating a PDP context request to the GGSN 174. The PDP context request includes an APN indication of, for example, 'conl.mot.com' in step 450. The GGSN 174 receives the PDP context request and determines from the processed APN that an IP address relating to 'con1.mot.com' is required from the DHCP Server 410, as shown in step 455. In this manner, the console is able to obtain access to the particular network identified by the APN.

Upon receiving the IP address request from the GGSN 174, the DHCP Server 410 send the corresponding IP address to the GGSN 174 in step 460. This IP address is then forwarded from the GGSN 174 to the console 162 in step 465. The console is then able to send (and receive) packet data, in step 425, to/from the customer network (or another console or subscriber/mobile unit) 420, using the IP address obtained from the customer network's DHCP Server 410.

When the console 162 wishes to terminate the session, the console 162 sends a terminate PDP message to its GGSN 174, in step 470. The GGSN 174 transmits a release IP address message, in step 475, to the DHCP Server 410. The DHCP Server 410 then acknowledges the termination to the GGSN 174, in step 480, and the GGSN 174 acknowledges the termination to the console 162, in step 485.

Although the preferred embodiment of the present invention is described with respect to a TETRA-type system, employing GPRS/UMTS system architecture such as a GGSN and GTP tunnels, it is within the contemplation that other communication systems and architecture could benefit from the inventive concepts described herein. In particular, the inventive concepts find specific benefit in control radio systems that employ a packet data feature, using a GGSN and a GTP tunnel.

It is also within the contemplation of the invention that the database is described as residing in the DHCP Server,.

Consequently, the present invention finds applicability in wireless communication systems such as the UMTS or GPRS systems.

It is also envisaged that the inventive concepts described herein may be used to resolve communication between multiple networks with independent IP plans, for example to support one application in one Network that wishes to connect to a number of applications in a number of different, independent networks. As a further example: operators, which are located in their own networks, may want to monitor some applications in the other networks without wanting to be physically connected to all those networks at the same time. The inventive concepts described herein can be used to connect all these networks concurrently using GTP tunnels, where a device in the network provides GGSN functionality.

It will be understood that the aforementioned mechanism for reconfiguring the role of a fixed host by applying a GTP tunnel linking the fixed host to a GGSN, additionally provides at least the following advantages:
(i) There is no requirement for a fixed host, being a console, to have two (or multiple) IP addresses belonging to two (or multiple) different IP spaces. In this regard, the console is provided with the opportunity to obtain IP address information, for example from a DHCP, by sending APNs via a GTP tunnelling route to a GGSN.
(ii) There is no requirement for a NAT to support different addresses between the GGSN and a console.
(iii) Encryption, for example on GTP-C, can be used without any limitations.
(iv) There is no impact on the standardisation process.
(v) It functions in the environment with multiple independent IP plans.

Whilst the specific, and preferred, implementations of the present invention are described above, it is clear that one skilled in the art could readily apply variations and modifications of such inventive concepts, as defined within the scope of the appended claims.

Thus, a communication system, a fixed host being a console and a method of communicating information, has been provided that alleviates some of the aforementioned disadvantages associated with prior art arrangements.

## Claims

1. A method of communicating information in a communication system (400) wherein a host (162) is operably coupled to a communication network (350) via a gateway general packet radio server, GPRS, service node, GGSN, (174), including the steps of:
A- transmitting (450), by said host (162) a message to said GGSN (174) using a GPRS transport protocol, GTP, tunnel (260) wherein, said message includes an access point name, APN, of said communication network (350);
B- requesting (455), by said GGSN (174) an Internet Protocol address relating to said APN, from a database residing in a DMCP server (410);
C - transmitting (460, 465) said Internet Protocol address from said database to said host (162);
D - receiving (465) said Internet Protocol address at said host; and
E - initiating, by said host, a communication session (425) with said communication network (350) using said Internet Protocol address;
**characterised in that** the host is a fixed host being a console (162) of a dispatch and control radio system and including a transceiver and, operably coupled to the transceiver, a processor for generating said message, whereby said host is linked to said GGSN via said GTP tunnel (260)

2. The method of communicating (400) according to Claim 1, the method further including the steps of:
terminating said session, by said fixed host (162) by sending (470) a terminate message to the GGSN (174); and
transmitting (475), by said GGSN (174) a release Internet Protocol address message to said database (410).

3. The method of communicating (400) according to any one preceding Claim, wherein said database (410) resides in a DHCP Server.

4. The method of communicating (400) according to Claim 3, wherein said DHCP Server (410) is located in said communication network (350).

5. The method of communicating (400) according to any one preceding Claim, wherein said step of transmitting (450) a message includes sending a 'create packet data protocol, PDP, context' message to said communication network (350).

6. The method according to any one of the preceding claims wherein the console (162) is connected to different networks to support concurrent IP sessions by applying different APNs to messages to the GGSN.

7. The method according to any one of the preceding Claims wherein the IP address obtained from the address allocation server (410) is dynamically applied to messages of the console (162) whilst the console is sending or receiving data.

8. A console (162) for use in a dispatch and control radio system (162),
said console (162) being adapted to perform the steps A, D and E of claim 1, and any of the steps carried out by said console in any of claim 2 to 7, said console being **characterized in that**:
said host is a fixed host being a console of a dispatch and control radio system and including a transceiver, and, operably coupled to the transceiver, a processor for generating the message transmitted in step A of claim 1,
said console is linked to said GGSN via the GTP, GPRS Transport Protocol, tunnel (260) used in step A of claim 1.

9. A console (162) according to claim 8 which is operably coupled to a communication network (350) via a gateway general packet radio server, GPRS, service node, GGSN (174), console (162) including:
a transceiver for transmitting and/or receiving communication to/from a communication network (350), over GPRS transport protocol tunnel; and
a processor, operably coupled to said transceiver, for generating a message that includes an access point name, APN, to be transmitted to said GGSN (174) requesting an Internet Protocol address relating to said APN.

10. The console (162) according to Claim 9, wherein said transceiver is operable to receive (465) said Internet Protocol address from said GGSN (174) and to initiate a communication session (425) with said communication network (350) using said Internet Protocol address.

11. A dispatch and control radio communication system (100, 300) comprising a console (162) according to Claim 9 or Claim 10.

12. A system according to claim 11 wherein the system comprises a TETRA system.

13. A communication system (300) adapted to communicate information, said system comprising a communication network (350), a host (162), a gateway general packet radio server, GPRS, service node, GGSN (174), and a database residing in a DHCP server (410):
said GGSN (174) being adapted to perform the step B of claim 1, and any of the steps carried out by said GGSN (174) in any of claim 2 to 7,
said database being adapted to perform the step C in claim 1, and any of the steps carried out by said database in any of claim 2 to 7,
said host (162) being adapted to perform the steps A, D and E of claim 1, and any of the steps carried out by said host in any of claim 2 to 7, said host being **characterized in that**:
said host is a fixed host being a console of a dispatch and control radio system and including a transceiver, and, operably coupled to the transceiver, a processor for generating the message transmitted in step A of claim 1,
said host is linked to said GGSN via the GTP, GPRS Transport Protocol, tunnel (260) used in step A of claim 1.

## Patentansprüche

1. Verfahren zum Kommunizieren von Informationen in einem Kommunikationssystem (400), wobei ein Host (162) über einen Gateway-GPRS-Dienstknoten, GGSN, (174) (GPRS = allgemeiner paketorientierter Funkserver) betriebsbereit an ein Kommunikationsnetzwerk (350) gekoppelt ist, wobei das Verfahren die folgenden Schritte umfasst:
A - Übertragen (450), durch den Host (162), einer Nachricht an den GGSN (174) unter Verwendung eines GPRS-Transportprotokoll (GTP)-Tunnels (260), wobei die Nachricht einen Zugriffspunktnamen, APN, des Kommunikationsnetzwerkes (350) enthält;
B - Abrufen (455), durch den GGSN (174), einer Internetprotokolladresse, die dem APN zugeordnet ist, aus einer Datenbank, die sich in einem DMCP-Server (410) befindet;
C - Übertragen (460, 465) der Internetprotokolladresse von der Datenbank zu dem Host (162);
D - Empfangen (465) der Internetprotokolladresse bei dem Host; und
E - Initiieren, durch den Host, einer Kommunikationssitzung (425) mit dem Kommunikationsnetzwerk (350) unter Verwendung der Internetprotokolladresse; **dadurch gekennzeichnet, dass** der Host ein fester Host ist, der eine Konsole (162) eines Versand- und Steuerfunksystems ist, und einen Transceiver und einen betriebsbereit an den Transceiver gekoppelten Prozessor zum Erzeugen der Nachricht umfasst, wobei der Host über den GTP-Tunnel (260) mit dem GGSN verknüpft ist.

2. Verfahren zum Kommunizieren (400) gemäß Anspruch 1, wobei das Verfahren weiterhin die folgenden Schritte umfasst:
Beenden der Sitzung durch den festen Host (162) durch Senden (470) einer Beendigungsnachricht an den GGSN (174);
Übertragen (475), durch den GGSN (174), einer Freigabeinternetprotokolladressennachricht an die Datenbank (410).

3. Verfahren zum Kommunizieren (400) gemäß einem der vorangehenden Ansprüche, wobei sich die Datenbank (410) in einem DHCP-Server befindet.

4. Verfahren zum Kommunizieren (400) gemäß Anspruch 3, wobei der DHCP-Server (410) in dem Kommunikationsnetzwerk (350) lokalisiert ist.

5. Verfahren zum Kommunizieren (400) gemäß einem der vorangehenden Ansprüche, wobei der Schritt eines Übertragens (450) einer Nachricht ein Senden einer 'Erzeuge Paketdatenprotokoll, PDP, -Kontext'-Nachricht an das Kommunikationsnetzwerk (350) umfasst.

6. Verfahren gemäß einem der vorangehenden Ansprüche, wobei die Konsole (162) an verschiedene Netzwerke angeschlossen ist, um durch Zuführen verschiedener APNs zu Nachrichten an den GGSN simultane IP-Sitzungen zu unterstützen.

7. Verfahren gemäß einem der vorangehenden Ansprüche, wobei die von dem Adressenzuordnungsserver (410) erhaltene IP-Adresse Nachrichten der Konsole (162) dynamisch zugeführt wird, während die Konsole Daten sendet oder empfängt.

8. Konsole (162) zur Verwendung in einem Versand- und Steuerfunksystem (162), wobei die Konsole (162) adaptiert ist, um die Schritte A, D und E von Anspruch 1 und jeden beliebigen der Schritte, die durch die Konsole in einem der Ansprüche 2 bis 7 ausgeführt werden, durchzuführen, wobei die Konsole **dadurch gekennzeichnet ist, dass** der Host ein fester Host ist, der eine Konsole eines Versand- und Kontrollfunksystems ist, und einen Transceiver und einen betriebsbereit an den Transceiver gekoppelten Prozessor zum Erzeugen der in dem Schritt A von Anspruch 1 übertragenen Nachricht umfasst und die Konsole über den in dem Schritt A von Anspruch 1 verwendeten GTP, GPRS-Transportprotokoll, -Tunnel (260), mit dem GGSN verknüpft ist.

9. Konsole (162) gemäß Anspruch 8, die über einen Gateway-GPRS-Dienstknoten, GGSN, (174) (GPRS = allgemeiner paketorientierter Funkserver) betriebsbereit an ein Kommunikationsnetzwerk (350) gekoppelt ist, wobei die Konsole (162) umfasst:
einen Transceiver zum Übertragen und/oder Empfangen von Kommunikationen über einen GPRS-Transportprotokolltunnel zu/von einem Kommunikationsnetzwerk (350); und
einen betriebsbereit an den Transceiver gekoppelten Prozessor, zum Erzeugen einer Nachricht, die einen Zugriffspunktnamen, APN, enthält, der zu dem GGSN (174) zu übertragen ist, der eine Internetprotokolladresse anfordert, die sich auf den APN bezieht.

10. Konsole (162) gemäß Anspruch 9, wobei der Transceiver betreibbar ist, um die Internetprotokolladresse von dem GGSN (174) zu empfangen (465) und unter Verwendung der Internetprotokolladresse eine Kommunikationssitzung (425) mit dem Kommunikationsnetzwerk (350) zu initiieren.

11. Versand- und Steuerfunkkommunikationssystem (100, 300), das eine Konsole (162) gemäß Anspruch 9 oder Anspruch 10 umfasst.

12. System gemäß Anspruch 11, wobei das System ein TETRA-System umfasst.

13. Kommunikationssystem (300), das adaptiert ist, um Informationen zu kommunizieren, wobei das System ein Kommunikationsnetzwerk (350), einen Host (162), einen Gateway-"Allgemeiner paketorientierter Funkserver", GPRS, - Dienstknoten, GGSN, (174) und eine Datenbank, die sich in einem DHCP-Server (410) befindet, umfasst:
wobei der GGSN (174) adaptiert ist, um den Schritt B von Anspruch 1 und jeden beliebigen der Schritte, die durch den GGSN (174) in einem der Ansprüche 2 bis 7 ausgeführt werden, durchzuführen,
wobei die Datenbank adaptiert ist, um den Schritt C in Anspruch 1 und jeden beliebigen der Schritte, die durch die Datenbank in einem der Ansprüche 2 bis 7 ausgeführt werden, durchzuführen,
wobei der Host (162) adaptiert ist, um die Schritte A, D und E von Anspruch 1 und jeden beliebigen der Schritte, die durch den Host in einem der Ansprüche 2 bis 7 ausgeführt werden, durchzuführen, wobei der Host **dadurch gekennzeichnet ist, dass**
der Host ein fester Host ist, der eine Konsole eines Versand- und Steuerfunksystems ist und einen Transceiver und einen betriebsbereit an den Transceiver gekoppelten Prozessor zum Erzeugen der in dem Schritt A von Anspruch 1 übertragenen Nachricht umfasst,
der Host über den in dem Schritt A von Anspruch 1 verwendeten GTP, GPRS-Transportprotokoll, -Tunnel (260) mit dem GGSN verknüpft ist.

## Revendications

1. Procédé de communication d'informations dans un système de communication (400), dans lequel un hôte (162) est fonctionnellement couplé à un réseau de communication (350) par l'intermédiaire d'un noeud passerelle GGSN (174) de support du serveur GPRS (*General Packet Radio Service),* comprenant les étapes selon lesquelles :
A - ledit hôte (162) transmet (450) un message audit GGSN (174) par l'intermédiaire d'un tunnel GTP (*GPRS Transport Protocol*) (260), ledit message comprenant un nom de point d'accès APN (*Access Point Name*) dudit réseau de communication (350) ;
B - ledit GGSN (174) demande (455) une adresse de Protocole Internet associée audit APN, auprès d'une base de données résidant dans un serveur DHCP (410) ;
C - ladite adresse de Protocole Internet est transmise (460, 465) de ladite base de données audit hôte (162) ;
D - ladite adresse de Protocole Internet est reçue (465) par ledit hôte ; et
E - ledit hôte démarre une session de communication (425) avec ledit réseau de communication (350), à l'aide de ladite adresse de Protocole Internet ;
**caractérisé en ce que** l'hôte est un hôte fixe qui est une console (162) d'un système radio de répartition et de commande et qui comprend un émetteur-récepteur, et, fonctionnellement couplé à l'émetteur-récepteur, un processeur servant à générer ledit message, moyennant quoi ledit hôte est relié audit GGSN par l'intermédiaire dudit tunnel GTP (260).

2. Procédé de communication (400) selon la revendication 1, le procédé comprenant, en outre, les étapes selon lesquelles :
- ledit hôte fixe (162) met fin à ladite session en envoyant (470) un message d'arrêt au GGSN (174) ; et
- ledit GGSN (174) transmet (475) un message de libération d'adresse de Protocole Internet à ladite base de données (410).

3. Procédé de communication (400) selon l'une quelconque des revendications précédentes, dans lequel ladite base de données (410) réside dans un serveur DHCP.

4. Procédé de communication (400) selon la revendication 3, dans lequel ledit serveur DHCP (410) est situé dans ledit réseau de communication (350).

5. Procédé de communication (400) selon l'une quelconque des revendications précédentes, dans lequel ladite étape de transmission (450) d'un message comprend l'envoi d'un message "créer un contexte PDP (*Packet Data Protocol*)*"* audit réseau de communication (350).

6. Procédé selon l'une quelconque des revendications précédentes, dans lequel la console (162) est connectée à différents réseaux de façon à supporter des sessions IP concurrentes, grâce à l'application de différents APN aux messages envoyés au GGSN.

7. Procédé selon l'une quelconque des revendications précédentes, dans lequel l'adresse IP obtenue auprès du serveur d'allocation d'adresse (410) est appliquée de façon dynamique aux messages de la console (162) pendant que la console envoie ou reçoit des données.

8. Console (162) à utiliser dans un système radio de répartition et de commande (162), ladite console (162) étant adaptée pour exécuter les étapes A, D et E de la revendication 1, et l'une quelconque des étapes exécutées par ladite console dans l'une quelconque des revendications 2 à 7, ladite console étant **caractérisée en ce que** :
ledit hôte est un hôte fixe qui est une console d'un système radio de répartition et de commande et qui comprend un émetteur-récepteur, et, fonctionnellement couplé à l'émetteur-récepteur, un processeur servant à générer le message transmis à l'étape A de la revendication 1,
ladite console est reliée au GGSN par l'intermédiaire du tunnel GTP (*GPRS Transport Protocol*) (260) utilisé à l'étape A de la revendication 1.

9. Console (162) selon la revendication 8, qui est fonctionnellement couplée à un réseau de communication (350) par l'intermédiaire d'un noeud passerelle GGSN (174) de support du serveur GPRS (*General Packet Radio Service*)*,* la console (162) comprenant :
un émetteur-récepteur pour transmettre et/ou recevoir une communication à destination/en provenance d'un réseau de communication (350), sur le tunnel GTP ; et
un processeur, fonctionnellement couplé audit émetteur-récepteur, servant à générer un message qui comprend un nom de point d'accès APN (*Access Point Name*) à transmettre audit GGSN (174), demandant une adresse de Protocole Internet associée audit APN.

10. Console (162) selon la revendication 9, dans laquelle ledit émetteur-récepteur a pour fonction de recevoir (465) ladite adresse de Protocole Internet en provenance dudit GGSN (174) et de démarrer une session de communication (425) avec ledit réseau de communication (350) à l'aide de ladite adresse de Protocole Internet.

11. Système de communication radio de répartition et de commande (100, 300) comprenant une console (162) selon la revendication 9 ou la revendication 10.

12. Système selon la revendication 11, dans lequel le système comprend un système TETRA.

13. Système de communication (300) adapté pour communiquer des informations, ledit système comprenant un réseau de communication (350), un hôte (162), un noeud passerelle GGSN (174) de support du serveur GPRS (*General Packet Radio Service*)*,* et une base de données résidant dans un serveur DHCP (410) :
ledit GGSN (174) étant adapté pour exécuter l'étape B de la revendication 1, et l'une quelconque des étapes exécutées par ledit GGSN (174) dans l'une quelconque des revendications 2 à 7,
ladite base de données étant adaptée pour exécuter l'étape C de la revendication 1, et l'une quelconque des étapes exécutées par ladite base de données dans l'une quelconque des revendications 2 à 7,
ledit hôte (162) étant adapté pour exécuter les étapes A, D et E de la revendication 1, et l'une quelconque des étapes exécutées par ledit hôte dans l'une quelconque des revendications 2 à 7, ledit hôte étant **caractérisé en ce que** :
ledit hôte est un hôte fixe qui est une console d'un système radio de répartition et de commande et qui comprend un émetteur-récepteur, et, fonctionnellement couplé à l'émetteur-récepteur, un processeur servant à générer le message transmis à l'étape A de la revendication 1,
ledit hôte est relié au GGSN par l'intermédiaire du tunnel GTP (*GPRS Transport Protocol*) (260) utilisé à l'étape A de la revendication 1.
